# FASCICULE DE BREVET EUROPEEN

(11) **EP 3 266 573 B1**
(45) Date de publication et mention de la délivrance du brevet: **12.12.2018**
(21) Numéro de dépôt: 17178802.9
(22) Date de dépôt: 29.06.2017
(51) Int. Cl.: B25J 21/02, G21F 7/04, G21F 7/047, G21F 7/053

(54) **ENROULEUR DE GANT OU DE SAC DESTINE A EQUIPER UNE BOITE A GANT D'ENCEINTE FERMEE**
AUFROLLVORRICHTUNG FÜR HANDSCHUHE ODER BEUTEL, DIE FÜR DIE AUSRÜSTUNG EINES HANDSCHUHFACHS MIT GESCHLOSSENEM KASTEN BESTIMMT IST
GLOVE OR BAG WINDER INTENDED FOR EQUIPPING A GLOVE BOX WITH ENCLOSED HOUSING

(30) Priorité: 05.07.2016 FR 1656398
(43) Date de publication de la demande: 10.01.2018
(73) Titulaire: Commissariat à l'énergie atomique et aux énergies alternatives, 75015 Paris (FR)
(72) Inventeur: PARRENIN, Cédric, 21120 Til-Chatel (FR)
(74) Mandataire: Brevalex

(56) Documents cités:
- WO-A1-2008/040775
- WO-A1-2016/190877

## Description

### DOMAINE TECHNIQUE

L'invention se rapporte à des ronds de gants équipant une enceinte de type boîte à gants utilisée notamment pour la manipulation de matière radioactive. Une telle boîte comprend un corps portant des panneaux transparents pourvus d'ouvertures recevant des ronds de gants auxquels sont fixés des gants. Elle constitue une enceinte fermée qui est dépressurisée, et qui permet à un opérateur de manipuler, grâce aux gants, des éléments présents dans la boîte tout en étant situé hors de cette boîte.

### ÉTAT DE LA TECHNIQUE ANTÉRIEURE

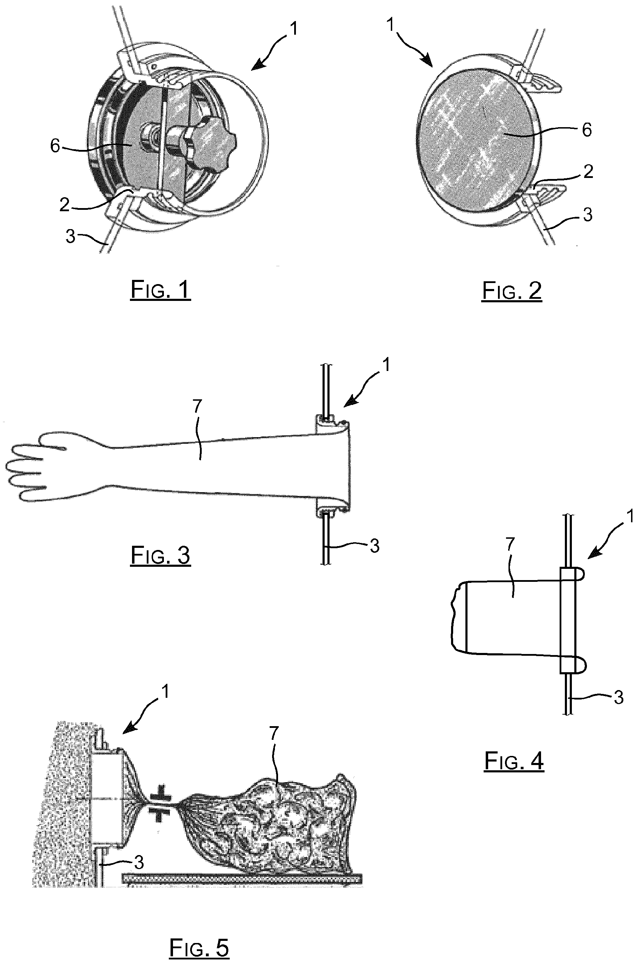

Comme représenté sur les figures 1 et 2, un tel rond de gant 1 comprend un corps de révolution 2 engagé dans un trou correspondant formé dans un panneau 3 de la boîte tout en étant fixé à ce trou, et qui comporte une ouverture centrale.

Le corps de révolution 2 constitue une sorte de douille présentant une portion interne située dans l'enceinte que délimite la boîte, et une portion externe qui dépasse du panneau 3 pour s'étendre hors de la boîte.

Comme représenté sur la figure 3, un gant 4 en matière élastomère ou analogue est fixé par sa base à la portion externe du corps 2, et il traverse ce rond de gant pour s'étendre majoritairement dans l'enceinte dans laquelle il est naturellement aspiré du fait que celle-ci est en dépression.

En pratique, le rond de gant 1 comporte un obturateur 6 permettant de fermer son ouverture centrale. Lorsque l'opérateur a terminé sa manipulation, il saisit avec le gant l'obturateur laissé dans la boîte et le met en place dans l'ouverture centrale pour la fermer hermétiquement. A ce stade, le gant est situé entièrement hors de la boîte et pend verticalement depuis sa base fixée à la portion externe du rond de gant. Pour réaliser une nouvelle manipulation, l'opérateur enfile sa main dans l'extrémité du gant, retire l'obturateur pour le déposer dans la boîte en engageant le gant à travers l'ouverture de façon à être en mesure de réaliser ses opérations.

Lorsque le rond de gant est dépourvu d'obturateur, l'opérateur sort les gants qu'il utilise et il les noue l'un à l'autre hors de la boîte pour éviter qu'ils ne soient aspirés par la dépression régnant dans cette boîte.

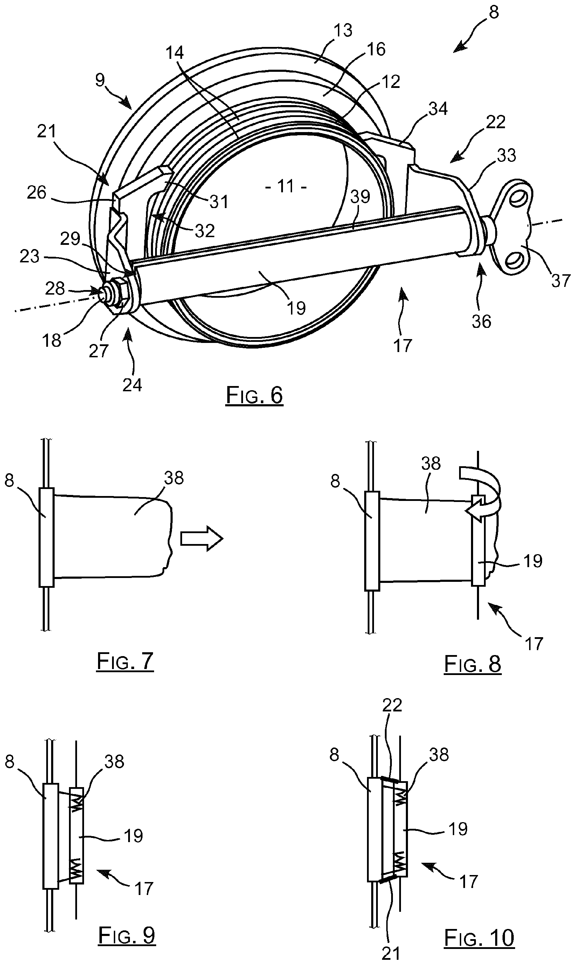

D'une manière analogue, un tel rond de gant peut porter un sac 7 en vinyle au lieu d'un gant, comme représenté sur les figures 5 et 6, ce sac étant alors utilisé d'une manière analogue pour extraire de la boîte un ou des éléments qu'elle contient. Comme visible sur la figure 4, l'élément est alors placé dans le sac hors de la boîte, avant de couper et sertir ce sac pour pouvoir disposer de l'élément en question, sans avoir mis en communication l'intérieur de la boîte avec son environnement.

Lorsque le rond de gant est équipé d'un sac en vinyle 7, il n'est généralement pas possible de nouer ce sac à l'extérieur, de sorte qu'il reste alors en étant aspiré vers l'intérieur comme illustré sur la figure 5. Ceci induit notamment que le sac est continuellement sollicité en tension, ce qui accélère sa dégradation, impliquant par là-même son remplacement anticipé et la production d'un déchet non souhaitée.

WO2008/040775 divulgue un support de gant souple sur lequel un gant peut être enroulé et l'ensemble est glissé à l'intérieur du rond de gant pour être maintenu par friction.

### EXPOSÉ DE L'INVENTION

A cet effet, l'invention a pour objet un enrouleur comprenant un rouleau et des moyens de fixation à une portion externe d'un rond de gant équipant une enceinte fermée à dépression ou à un panneau portant ce rond de gant, pour enrouler hors de cette enceinte un gant ou un sac porté par ce rond de gant.

L'invention permet ainsi d'enrouler un gant ou un sac dépassant hors du rond de gant qui le porte et de fixer l'enrouleur à ce rond de gant pour toute la période durant laquelle le sac ou le gant est inutilisé.

L'invention concerne également un enrouleur ainsi défini, comprenant un rouleau porté par un axe et dans lequel les moyens de fixation sont formés par deux pattes de fixation par enserrement de la portion externe du rond de gant, chaque patte étant traversée par une extrémité de l'axe et pressée contre une extrémité du rouleau par un écrou vissé en extrémité d'axe.

L'invention concerne également un enrouleur ainsi défini, dans lequel l'une des pattes est rigidement solidarisée à une extrémité de l'axe.

L'invention concerne également un enrouleur ainsi défini, dans lequel l'un des écrous est un écrou papillon.

L'invention concerne également un enrouleur ainsi défini, dans lequel le rouleau rotatif comporte une fente de blocage pour recevoir une extrémité d'un gant ou d'un sac avant enroulement.

L'invention concerne également un enrouleur ainsi défini, comportant un bras rabattable le long du rouleau pour enserrer contre ce rouleau une extrémité d'un gant ou d'un sac afin de la bloquer avant enroulement.

L'invention concerne également un enrouleur ainsi défini, dans lequel les moyens de fixation sont pourvus d'organes de réception du rouleau par encliquetage.

L'invention concerne également un enrouleur ainsi défini, dans lequel les moyens de fixation sont agencés pour être fixés à demeure au rond de gant ou à un panneau portant ce rond de gant.

L'invention concerne également un rond de gant équipé d'un enrouleur ainsi défini.

### BRÈVE DESCRIPTION DES DESSINS

La figure 1 déjà décrite est une vue externe d'un rond de gant à obturateur ;
La figure 2 déjà décrite est une vue interne d'un rond de gant à obturateur ;
La figure 3 déjà décrite est une vue latérale d'un gant qui est aspiré à l'intérieur d'une boîte à gants ;
La figure 4 déjà décrite est une vue latérale d'un sac porté par un rond de gant et aspiré à l'intérieur d'une boîte à gants ;
La figure 5 déjà décrite est une vue latérale d'un sac situé hors de la boîte et renfermant un élément à extraire de cette boîte ;
La figure 6 est une vue en perspective d'un rond de gant équipé d'un enrouleur selon l'invention ;
La figure 7 est une vue latérale d'un sac extrait hors d'un rond de gant ;
La figure 8 est une vue latérale montrant l'enroulement d'un sac autour de l'enrouleur selon l'invention ;
La figure 9 est une vue en latérale d'un sac entièrement enroulé autour de l'enrouleur selon l'invention ;
La figure 10 est une vue latérale d'un sac enroulé autour de l'enrouleur selon l'invention qui est fixé au rond de gant ;
La figure 11 est une vue en perspective montrant partiellement une variante de réalisation du dispositif selon l'invention.

### EXPOSÉ DÉTAILLÉ DE MODES DE RÉALISATION PARTICULIERS

L'idée à la base de l'invention est d'éviter l'aspiration d'un sac ou d'un gant sous l'effet de la dépression lorsque ce sac ou ce gant est inutilisé alors que le rond de gant auquel il est fixé est dépourvu d'obturateur.

Le rond de gant 8 de la figure 6 comprend un corps 9 ayant une forme de révolution correspondant à celui d'une douille délimitant une ouverture centrale circulaire 11. Ce corps 9 comprend une portion interne 13 et une portion externe 12 pourvue de plusieurs gorges circonférentielles externes 14, ce corps 9 étant engagé dans une ouverture circulaire d'un panneau non représenté.

Le corps 9 est maintenu au panneau par une bague 16 qui entoure sa portion externe 12 pour enserrer ce panneau entre cette bague 16 et la portion interne 13 du corps 9.

L'enrouleur selon l'invention qui est repéré par 17 sur la figure 6 comporte un axe 18 portant un rouleau 19 s'étendant sur la majorité de la longueur de cet axe 18, ainsi que deux pattes de fixation 21, 22 fixées chacune à une extrémité de cet axe 18.

Comme visible sur la figure 6, la patte 21 a une forme générale correspondant à celle d'une plaque repliée globalement à angle droit. Elle comporte une extrémité percée 23 par laquelle elle est fixée à une première extrémité 24 de l'ensemble formé par l'axe 18 portant le rouleau 19, et une extrémité de serrage 26 en appui contre une gorge 14 de la portion externe du corps 9 lorsque l'enrouleur est installé.

L'extrémité percée 23 de la patte 21 est enserrée entre un écrou 27 vissé à une première extrémité 28 de l'axe 18 et une première extrémité 29 du rouleau 19. L'axe 18 et le rouleau 19 s'étendent selon une direction AX, et l'extrémité percée 23 s'étend selon un plan normal à cette direction AX lorsque l'enrouleur est serré.

L'extrémité de serrage 26 s'étend quant à elle parallèlement à l'axe AX, c'est-à-dire perpendiculairement à l'extrémité percée 23. Cette extrémité de serrage 26 se termine par deux touches dont une, est visible sur la figure 6 où elle est repérée par 31, qui sont espacées l'une de l'autre, et séparées par un évidement 32 leur permettant d'être l'une et l'autre en appui dans l'une des gorges 14 lorsque l'enrouleur est monté.

La seconde patte 22 est identique à la première patte 21, elle comporte elle aussi une extrémité percée, repérée par 33, et une extrémité de serrage, repérée par 34 et s'étendant à angle droit par rapport à l'extrémité percée 33.

La seconde patte 22 est fixée à la seconde extrémité 36 de l'ensemble formé par le rouleau 19 et son axe 18 en étant traversée par l'extrémité opposée de l'axe 18, en étant pressée contre la seconde extrémité du rouleau 19 par un écrou papillon 37 vissé à la seconde extrémité de l'axe 18.

D'une manière générale, les extrémités de serrage 26 et 34 des deux pattes 21 et 22 forment conjointement les mâchoires d'une pince ou d'un bridage se serrant sur la gorge du pourtour de la portion externe 12. Leur serrage et leur desserrage est obtenu en serrant ou en desserrant manuellement l'écrou papillon 37.

Dans l'exemple des figures, chaque patte est formée de deux éléments qui sont solidarisés l'un à l'autre, l'un correspondant à l'extrémité de serrage, et l'autre correspondant à l'extrémité percée, mais chaque patte peut aussi être formée d'un seul tenant de tôle découpée, emboutie et/ou pliée.

Ces pattes 21 et 22 peuvent en outre être prévues pour porter des équipements complémentaires tels que des moyens de protection biologique contre les rayonnements et/ou un capot de protection du sac enroulé vis-à-vis des agressions mécaniques.

En pratique, les faces des extrémités du rouleau 19 s'étendent parallèlement l'une à l'autre perpendiculairement à l'axe de ce rouleau 19. Serrer l'écrou papillon 37 permet ainsi de plaquer simultanément les extrémités percées 23 et 33 des pattes 21 et 22 respectivement contre les deux extrémités du rouleau 19 pour rapprocher les extrémités de serrage 26, 34 de ces pattes l'une vers l'autre, et également bloquer en rotation le rouleau 19. Desserrer l'écrou papillon 37 permet de manière analogue de desserrer ces pattes.

Avantageusement, l'extrémité percée 23 comporte un filetage, et l'écrou 27 est du type autobloquant, de sorte que la première patte 21 est rigidement solidarisée à la première extrémité 28 de l'axe 18, pour simplifier la manipulation de l'enrouleur par un opérateur.

En pratique, une fois que l'opérateur a terminé d'utiliser le sac vinyle porté par un tel rond de gant 8, il extrait d'abord ce sac 38 hors de l'enceinte à travers le rond de gant 8, et à l'encontre de la dépression régnant dans l'enceinte, ce qui correspond à la situation de la figure 7.

Il engage ensuite l'extrémité libre du sac 38 dans une fente longitudinale 39 du rouleau 19, pour ensuite faire tourner ce rouleau de manière à enrouler le sac depuis son extrémité libre, ce qui correspond à la figure 8. Cette fente qui s'étend le long du rouleau peut être fermée ou bien traversante, et s'étendre sur tout ou partie de la longueur du rouleau 19.

L'opérateur enroule ainsi le sac 38 jusqu'au voisinage de sa base qui est fixée au corps 9 du rond de gant 8, ce qui correspond à la situation de la figure 9 dans laquelle le rouleau 19 est situé quasiment contre la portion externe 12 du corps 9 du rond de gant 8.

A ce stade, l'opérateur engage la première patte 21 autour de l'axe 18, en appui sur l'écrou autobloquant 27, et il engage le reste de l'axe 18 dans le rouleau 19, pour ensuite engager autour de la seconde extrémité de cet axe 18 qui dépasse de la deuxième extrémité du rouleau 19, la seconde patte 22, et l'écrou papillon 37.

L'opérateur place alors les extrémités de serrage 26 et 34 des pattes autour de la portion externe 12 et en vis-à-vis de l'une des gorges circonférentielles 14, pour serrer l'écrou papillon 37 de manière à resserrer ces pattes 21 et 22 pour qu'elles enserrent la portion externe 12 du corps 9 de manière à s'y fixer.

Au fur et à mesure que l'opérateur serre l'écrou papillon 37, d'une part il resserre les extrémités de serrage des pattes 21 et 22 pour fixer l'enrouleur au rond de gant 8, et d'autre part, il bloque le rouleau 19 en rotation, celui-ci se trouvant pressé entre les pattes 21 et 22 qui sont en appui sur ses extrémités.

Il est également possible d'enrouler le sac 38 autour du rouleau 19 équipé d'entrée de jeu de l'axe 18 et des pattes 21 et 22, l'écrou papillon 37 étant alors desserré, pour ensuite placer les pattes sur la gorge 14 avant de serrer l'écrou papillon pour conjointement fixer l'enrouleur et bloquer son rouleau.

Comme on l'aura compris, l'exemple des figures 7 à 10 est donné pour le cas d'un sac vinyle 38 enroulé autour du rouleau 19, mais la procédure est identique lorsqu'il s'agit d'un gant.

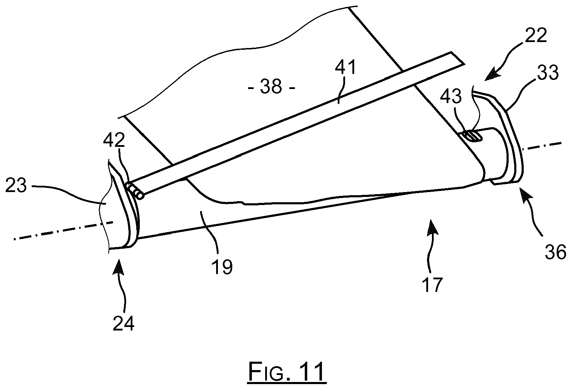

Par ailleurs, dans l'exemple de la figure 6, le rouleau 19 comporte une fente longitudinale dans laquelle s'engage l'extrémité du sac ou du gant pour la bloquer. Mais d'autres systèmes de blocages peuvent être envisagés, comme illustré sur l'exemple de la figure 11. Dans cet autre exemple de réalisation de l'invention, le rouleau 19 porte un bras rabattable 41 qui permet d'enserrer l'extrémité du gant ou sac 38 contre le rouleau pour la bloquer.

Dans l'exemple de la figure 11, ce bras 41 a une forme générale rectiligne d'une longueur sensiblement inférieure à celle du rouleau 19. L'une des extrémités de ce bras 41 est solidarisée à une extrémité 24 du rouleau 19 par une articulation 42 d'axe normal à l'axe du rouleau, et une attache de fixation 43 est prévue à l'extrémité opposée de ce bras 41, pour fixer le bras 41 plaqué contre le rouleau 19 et le long de celui-ci de manière à ce qu'il enserre l'extrémité du sac 38.

Ainsi, une fois que l'extrémité du sac 38 est bloquée en étant enserrée entre le bras 41 et le rouleau 19, l'opérateur enroule ce sac autour du rouleau 19 pour procéder ensuite comme détaillé plus haut.

Dans l'exemple des figures, l'enrouleur selon l'invention comporte un rouleau qui est solidarisé aux pattes de fixation avant de fixer l'ensemble au rond de gant. Les pâtes de fixation peuvent également être fixées à demeure au rond de gant, ou bien au panneau portant ce rond de gant, de part et d'autre de celui-ci, par exemple par collage. Dans ce cas, le rouleau est amovible par rapport aux pattes, et l'utilisateur enroule le gant ou le sac autour du rouleau, avant de positionner le rouleau entre les pattes pour les y fixer par exemple par encliquetage afin qu'elles assurent son maintien.

D'une manière générale, l'invention permet d'enrouler un sac ou un gant non utilisé pour éviter qu'il soit aspiré dans l'enceinte, ou bien qu'il pende hors de l'enceinte lorsque le rond de gant auquel il est fixé comporte un obturateur.

L'invention s'adapte aisément à différents diamètres de ronds de gants, ceux-ci étant usuellement compris entre cent-cinquante et cinq-cents millimètres, et elle présente l'intérêt de s'adapter aux modèles de ronds de gants standardisés.

L'invention s'applique à différents types d'enceintes sous dépression, qui sont généralement mises en oeuvre dans le domaine nucléaire, chimique et également biologique, et également hospitalier.

## Revendications

1. Enrouleur (17) comprenant un rouleau (19) et des moyens de fixation (21, 22) à une portion externe (12) d'un rond de gant (8) équipant une enceinte fermée à dépression ou à un panneau portant ce rond de gant (8), pour enrouler hors de cette enceinte un gant ou un sac porté par ce rond de gant (8).

2. Enrouleur (17) selon la revendication 1, comprenant un rouleau (19) porté par un axe (18) et dans lequel les moyens de fixation sont formés par deux pattes (21, 22) de fixation par enserrement de la portion externe (12) du rond de gant (8), chaque patte (21, 22) étant traversée par une extrémité de l'axe (18) et pressée contre une extrémité du rouleau (19) par un écrou (27, 37) vissé en extrémité d'axe.

3. Enrouleur (17) selon la revendication 2, dans lequel l'une des pattes (21, 22) est rigidement solidarisée à une extrémité de l'axe (18).

4. Enrouleur (17) selon la revendication 2 ou 3, dans lequel l'un des écrous (37) est un écrou papillon.

5. Enrouleur selon l'une des revendications 2 à 4, dans lequel le rouleau (19) comporte une fente de blocage (39) pour recevoir une extrémité d'un gant (38) ou d'un sac avant enroulement.

6. Enrouleur selon l'une des revendications 2 à 4, comportant un bras rabattable le long du rouleau (19) pour enserrer contre ce rouleau (19) une extrémité d'un gant (38) ou d'un sac afin de la bloquer avant enroulement.

7. Enrouleur selon la revendication 1, dans lequel les moyens de fixation sont pourvus d'organes de réception du rouleau par encliquetage.

8. Enrouleur selon la revendication 7, dans lequel les moyens de fixation sont agencés pour être fixés à demeure au rond de gant ou à un panneau portant ce rond de gant.

9. Rond de gant (8) destiné à équiper un panneau de boîte à gants délimitant une enceinte fermée, pour porter un gant de manipulation d'éléments dans l'enceinte ou bien un sac pour extraire des éléments de cette enceinte, ce rond de gant (8) étant équipé d'un enrouleur (17) selon l'une des revendications précédentes.

## Patentansprüche

1. Aufrollvorrichtung (17), umfassend eine Rolle (19) und Mittel zum Fixieren (21, 22) an einem externen Abschnitt (12) einer Wicklung von Handschuhen (8), welche einen durch Niederdrücken geschlossenen Aufnahmeraum bestückt, oder an einer Platte, welche diese Wicklung von Handschuhen (8) trägt, um außerhalb von diesem Aufnahmeraum einen von der Wicklung von Handschuhen (8) getragenen Handschuh oder Beutel aufzurollen.

2. Aufrollvorrichtung (17) nach Anspruch 1, umfassend eine durch eine Achse (18) getragene Rolle (19) und wobei die Mittel zum Fixieren durch zwei Fixierungsklauen (21, 22) zum Einschnüren des externen Abschnitts (12) der Wicklung von Handschuhen (8) gebildet sind, wobei jede Klause (21, 22) von einem Ende der Achse (18) durchquert ist und durch eine an dem Ende der Welle angeschraubte Mutter (27, 37) gegen ein Ende der Rolle (19) gedrückt ist.

3. Aufrollvorrichtung (17) nach Anspruch 2, wobei eine der Klauen (21, 22) fest mit einem Ende der Achse (18) verbunden ist.

4. Aufrollvorrichtung (17) nach Anspruch 2 oder 3, wobei die eine der Muttern (37) eine Flügelmutter ist.

5. Aufrollvorrichtung nach einem der Ansprüche 2 bis 4, wobei die Rolle (19) einen Blockierungsschlitz (39) zum Aufnehmen eines Endes eines Handschuhs (38) oder eines Beutels vor einem Aufrollen umfasst.

6. Aufrollvorrichtung nach einem der Ansprüche 2 bis 4, umfassend einen entlang der Rolle (19) ausklappbaren Arm zum Einschnüren eines Endes eines Handschuhs (38) oder eines Beutels gegen die Rolle (19) zum Blockieren davon vor dem Aufrollen.

7. Aufrollvorrichtung nach Anspruch 1, wobei die Mittel zum Fixieren als Elemente zum Aufnehmen der Rolle durch Einschnappen vorgesehen sind.

8. Aufrollvorrichtung nach Anspruch 7, wobei die Mittel zum Fixieren dazu eingerichtet sind, dauerhaft an der Wicklung von Handschuhen oder einer Platte fixiert zu sein, welche die Wicklung von Handschuhen trägt.

9. Wicklung von Handschuhen (8), welche dazu eingerichtet ist, eine Platte einer Handschuhschachtel zu bestücken, welche einen geschlossenen Aufnahmeraum begrenzt, um einen Handschuh zum Manipulieren von Elementen in dem Aufnahmeraum oder einen Beutel zum Entnehmen der Elemente aus dem Aufnahmeraum zu tragen, wobei die Wicklung von Handschuhen (8) mit einer Aufrollvorrichtung (17) nach einem der vorhergehenden Ansprüche ausgerüstet ist.

## Claims

1. Winder (17) comprising a roller (19) and means of attachment (21, 22) to an external portion (12) of a glove port (8) fitted on a closed vacuum chamber or a panel in which this glove port (8) is fitted, to roll a glove or a bag carried by this glove port (8) outside this chamber.

2. Winder (17) according to claim 1, comprising a roller (19) carried by a spindle (18) and in which the attachment means are formed by two attachment cleats (21, 22) by tightening of the external portion (12) of the glove port (8), one end of the spindle (18) passing through each cleat (21, 22) pressed in contact with one end of the roller (19) by a nut (27, 37) screwed to an end of the spindle.

3. Winder (17) according to claim 2, in which one of the cleats (21, 22) is rigidly fixed to one end of the spindle (8).

4. Winder (17) according to claim 2, in which one of the nuts (37) is a butterfly nut.

5. Winder according to claim 2, in which the roller (19) comprises a blocking slit (39) into which one end of a glove (38) or bag fits before winding.

6. Winder according to claim 2, comprising an arm that folds down along the roller (19) to clamp one end of a glove (38) or a bag in contact with this roller (19) so that it is blocked in place before winding.

7. Winder according to claim 1, in which the attachment means are provided with roller reception devices by click fitting.

8. Winder according to claim 7, in which the attachment means are arranged to be permanently fixed to the glove port or to a panel on which this glove port is fixed.

9. Glove port (8) that will be fitted on a glove box panel delimiting a closed chamber, to be fitted with a glove for the manipulation of elements in the chamber or a bag to extract elements from this chamber, this glove port (8) being fitted with a winder (17) according one of the above claims.
